# EUROPEAN PATENT SPECIFICATION

(11) **EP 2 500 299 B1**
(45) Date of publication and mention of the grant of the patent: **22.01.2014**
(21) Application number: 11425065.7
(22) Date of filing: 16.03.2011
(51) Int. Cl.: B65G 47/96

(54) **Tilting-tray sorting machine**
Kippschalensortiermaschine
Machine de tri à plateau basculant

(43) Date of publication of application: 19.09.2012
(73) Proprietor: SELEX ES S.p.A., Roma (IT)
(72) Inventor: Del Canto, Maurizio, Roma (IT); Parodi, Carlo, Roma (IT); Mignano, Paolo, Roma (IT)
(74) Representative: Bongiovanni, Simone

(56) References cited:
- WO-A1-01/60674
- WO-A2-2005/019071
- DE-A1- 19 755 877
- US-A- 3 662 874

## Description

The present invention relates to a tilting-tray sorting machine.

Known to the art are machines for sorting objects, for example parcels or luggage, which are provided with a plurality of carriages that are mobile along a generally closed path between at least one loading station and a plurality of unloading stations. Each carriage is provided with at least one tilting tray, which is set horizontal for enabling an object to be deposited thereon in the loading station. The carriages are designed to be driven in rotation, in succession, about a horizontal axis of the tray so as to tilt the tray itself and unload the object to an inlet of an unloading station, for example, the mouth of a chute arranged alongside of the path. The object slides by gravity along the surface of the tray and along the chute so as reach an area of accumulation or else a conveying system (for example, of a belt type).

Tilting-tray sorting machines of a known type perform the angular motion of inclination of the carriage by means of mechanical devices (cams or connecting rods), which are set in positions corresponding to the unloading stations and are designed to trigger rotation of the tray when the carriage approaches the outlet where the object is to be delivered. Alternatively, it is possible to use electric motors carried by the carriage, activated by a control system and connected with transmission of motion towards the tray via a mechanical transmission.

Both of the above technologies used are such as not to enable application of high angular accelerations to the tray, and hence the times of execution of the command governing tilting are not negligible. Said fact requires limitation of the speed of movement of the carriages along the path (typically the speed of the carriage must be less than 2 m/s) and hence the number of objects sorted per unit time. In the case where a higher speed is envisaged (for example, in the case where the carriages move at a speed higher than 2 m/s), it is necessary to envisage unloading stations provided with inlets (mouths for unloading the chutes) having considerable dimensions, and consequently, given the same number of outlets required, a sorting machine with a greater linear development is provided. Since unloading of the objects from the trays occurs by gravity, it is necessary to define correctly the path of unloading of the object, which is markedly conditioned by the coefficient of friction existing between the object and the tray. Said coefficient of friction varies according to the characteristics of the object, and objects made of different materials (for example, objects covered with paper or plastic) have markedly different coefficients of friction. This entails the need to increase in any case the dimensions of the inlets of the unloading stations, guaranteeing a safety margin necessary for compensating the variability of the paths of unloading of objects having different coefficients of friction. It should moreover be considered that static friction is higher than dynamic friction, and this can generate a further variability. In limit cases, the object may remain resting on the tray, whilst this is completely tilted. In order to solve said problem, known solutions envisage application of an impact on the tray linkage when the position of maximum inclination is reached or else a violent arrest of the tray. In both cases, the functional result is obtained at the expense of the structural oversizing of the ensemble and of the high risk of failure of the device for actuation of the tray.

The aim of the present invention is to provide a sorting machine that, in order to solve the problems of the known art, will apply a high acceleration to the movement of rotation of the tray, reducing the times of actuation of tilting, and a sharp deceleration at the end of rotation, and hence enabling increase in the speed of movement of the carriages.

The above aim is achieved by the present invention in so far as it relates to a machine for sorting objects, for example, parcels or luggage, comprising a plurality of carriages mobile along a generally closed path between at least one loading station and a plurality of unloading stations, each carriage being provided with at least one tilting-tray device for loading and unloading objects wherein a rotating element provided with a tray is angularly mobile with respect to a supporting structure and about a horizontal axis of rotation under the thrust of actuator means between: - a loading position, in which the tray is substantially horizontal and is designed to receive an object that can be rested on the tray itself; and - an unloading position, in which the tray is set inclined with respect to the horizontal to enable unloading of the object by gravity in an accumulation and/or conveying area; said sorting machine being **characterized in that:** said actuator means comprise an appendage of the rotating element that is transverse to the axis of rotation and has an end portion arranged on which are first magnetic-field generator means; and a curved portion of said supporting structure has a profile shaped like the arc of a circumference and carries second magnetic-field generator means arranged at an angular distance apart along said portion shaped like the arc of a circumference; the interaction between the magnetic fields generated by the first and second magnetic-field generator means produces a torque that is applied to the rotating element, thus enabling rotation of the tray about the horizontal axis of rotation so as to obtain said inclination. The invention will now be described with reference to the attached drawings, which represent a preferred non-limiting embodiment thereof and in which:
- Figure **1** is an overall simplified and schematic view of a sorting machine provided according to the teachings of the present invention;
- Figure **2** is a perspective view of a tilting-tray device for loading and unloading objects, without the pendulum-and-pan assembly, used in the machine of Figure 1;
- Figure **3** is a side view of the device of Figure 2 arranged in a first operative position;
- Figure **4** is a side view of the device of Figure 2 arranged in a second operative position;
- Figure **5** is a perspective view of a structure for supporting the pendulum-and-pan assembly that forms the device of Figure 2; and
- Figure **6** is a perspective view of the holding brake applied to the rotating element.

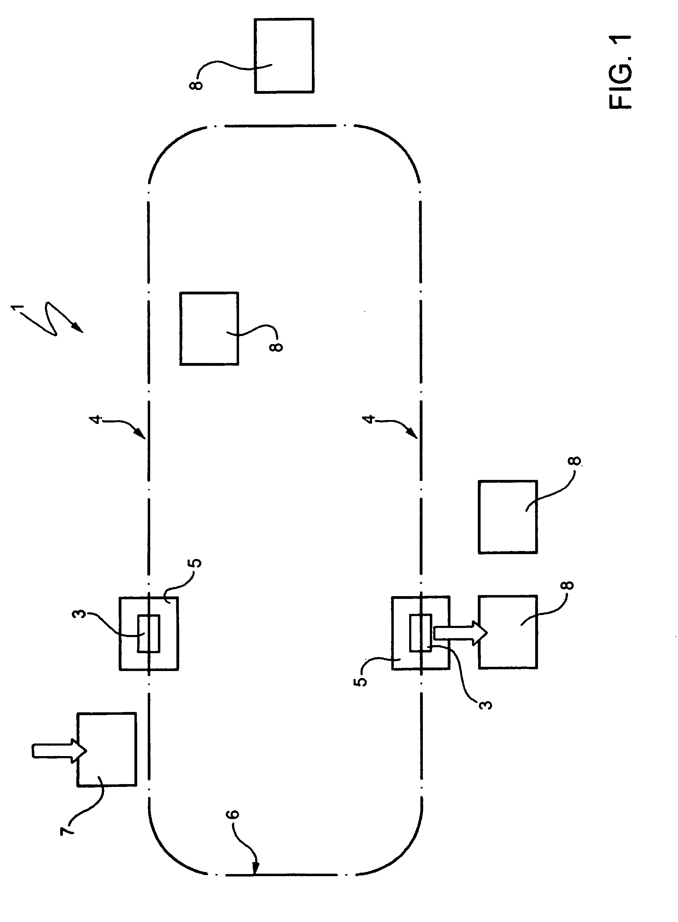

**Figure 1** is a schematic illustration of a machine 1 for sorting objects 3, for example parcels or luggage, which is provided with a plurality of carriages 5 mobile along a guide 4 that follows a generally closed path 6.

The carriages 5 are mobile between at least one loading station 7 (of a known type and consequently represented only schematically), in which the objects 3 are loaded onto the carriages 5, and a plurality of unloading stations 8 (of a known type and consequently represented only schematically), in which the objects 3 are released from the carriages 5. The various unloading stations 8 are selected for unloading the object 3 by means of a sorting programme of a known type.

The movement of the carriages 5 occurs by means of known techniques; for example, each carriage 5 can be provided with a motor drive of its own (for example, an electric motor - not illustrated) or else the carriages 5 can be moved by drawing means such as belts or chains (not illustrated) associated to the guide 4.

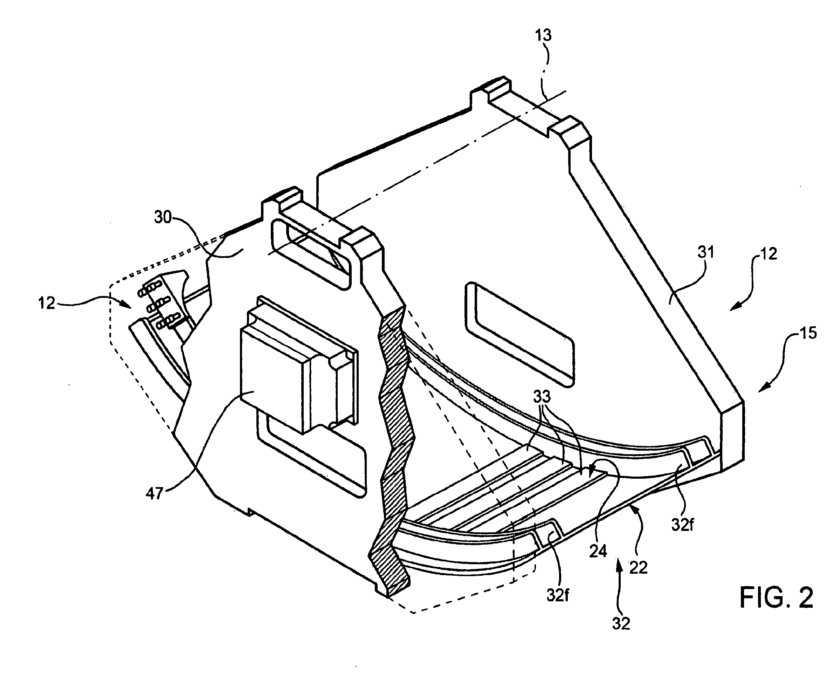

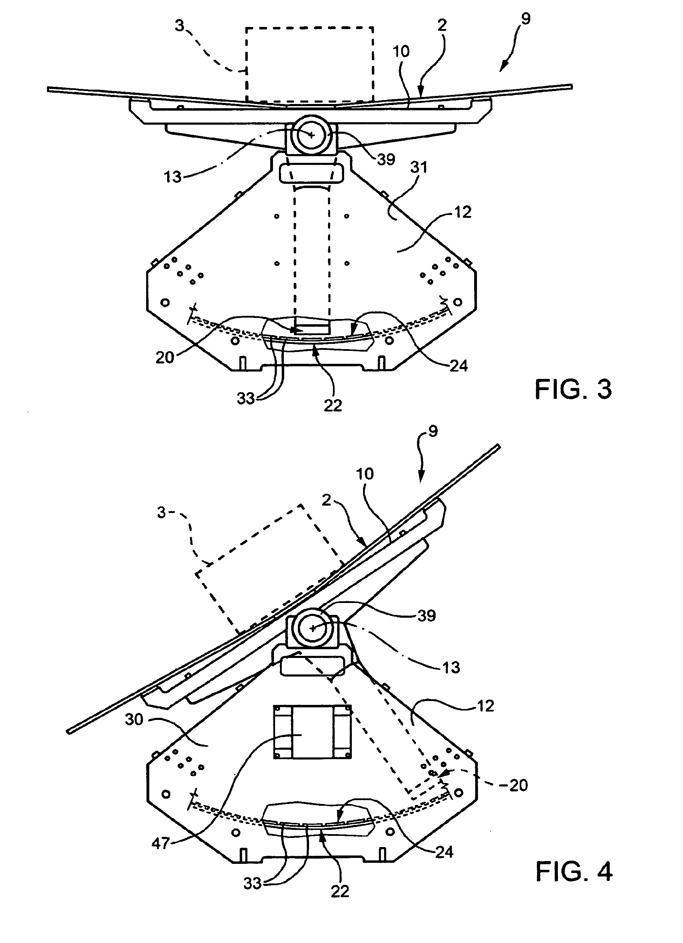

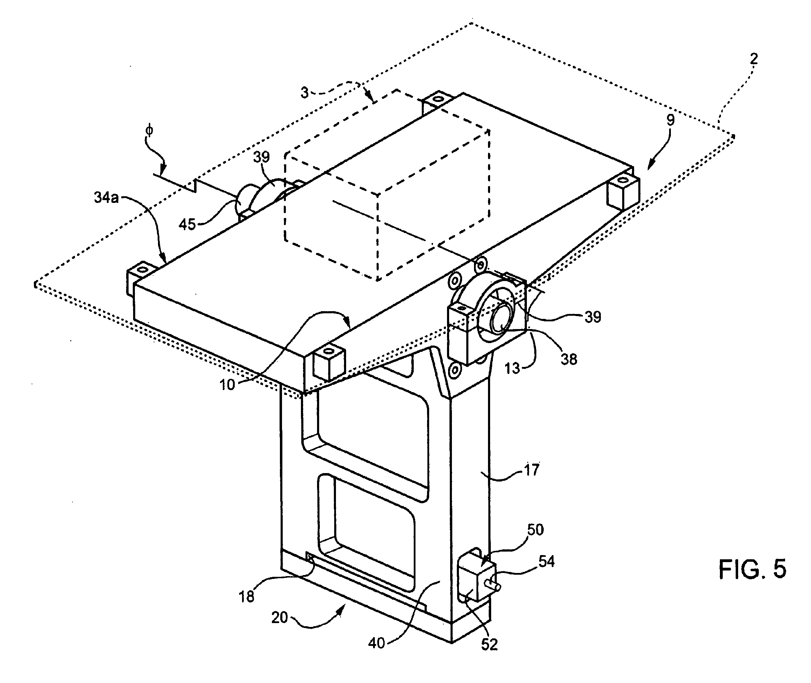

According to the present invention **(****Figure 2****)** each carriage 5 is provided with a tilting-tray device for loading and unloading objects provided according to the present invention. Said tilting-tray device for loading and unloading objects comprises a rotating element 9 (see also Figure **5****)** provided with a tray 2 carried by a supporting plate 10. The rotating element 9 is angularly mobile with respect to a supporting structure 12 (Figure 2) carried by the carriage 5 about a horizontal axis of rotation 13 and under the thrust of a linear electromagnetic actuator 15 between:
(i) a loading position **(****Figure 3****),** in which the plate 10 is substantially horizontal and is designed to enable an object 3 to rest on the tray 2, which is also horizontal; and
(ii) an unloading position **(****Figure 4****),** in which the tray 2 is set inclined with respect to the horizontal for enabling unloading of the object 3 by gravity in an accumulation and/or conveying area.

The linear electromagnetic actuator 15 comprises:
- an appendage 17 of the rotating element 9 (see **Figures 2** **and** **5****),** which extends from the supporting plate 10 downwards, has a parallelepipedal shape and comprises an end portion 18 arranged on which are first magnetic-field generator means 20 provided by a coil; and
- a portion 22 of the supporting structure 12, facing the first portion 18 and having a profile shaped like the arc of a circumference; the portion 22 carries second magnetic-field generator means 24 provided by permanent magnets (described in detail hereinafter) arranged at an angular distance apart along the entire portion 22.

The interaction between the magnetic fields generated by the first and second magnetic-field generator means 20, 24 produces a torque that is applied to the rotating element 9, thus providing rotation of the tray about the horizontal axis of rotation 13.

In this way, thanks to the interaction between the magnetic fields, a high angular acceleration can be applied to the tray 2, and above all a sharp deceleration of the tray 2 can be obtained at the end of rotation so as to guarantee inertial detachment of the object 3 from the tray 2 by overcoming the static friction. It is thus possible to increase the sorting capacity of the sorting machine or - given the same speed - it is possible to reduce the dimensions of the outlets and hence the overall length of the sorting machine.

It is moreover pointed out how between the supporting structure 12 and the tray 2 no type of mechanical transmission is present, and the tray 2 moves by means of "direct motion" actuation. Said "direct motion" actuation affords two fundamental advantages:
- the mechanical transmission present in "traditional" machines is eliminated; and
- the resistant torque required for angular rotation of the tray 2 can be evaluated with a high degree of precision.

The first characteristic enables elimination of wear of the transmission, which is, on the other hand, considerable, from the maintenance standpoint, in the case of traditional devices. No less important is the possibility of evaluating the resistant torque required for unloading the object whilst this is stationary on the tray (the modalities of assessment of the resistant torque will be illustrated hereinafter). Knowledge of the resistant torque required enables optimization of the energy consumption by applying appropriate profiles of acceleration according to the different loading situations, and at the same time calculation of the paths for unloading of the objects with a small margin of error, thus making possible use of outlets and inlets of smaller dimensions.

In greater detail, **Figure 2** is a perspective view of an example of embodiment of the supporting structure 12. According to said example, the supporting structure 12 comprises a first plane side wall 30 and a second plane side wall 31, which provide the sides of the supporting structure 12 and are perpendicular to the axis 13. The walls 30, 31 are connected together by a base wall 32 having a section shaped like the arc of a circumference with generatrices (see **Figure 2**) parallel to the axis 13. Preferably, the side walls 30, 31 have a perimeter approximately shaped like a regular pentagon and are made of aluminium obtained with machining by removal of stock or else by pressing. The base wall 32 is made of magnetic material (for example, Fe37) obtained from a portion of steel pipe or via pressing of aluminium and subsequent mechanical machining with steel insert, and its end portions are stably fixed - in particular welded - to the side walls 30, 31.

The central part of the base wall 32 defines the portion 22, which has a pair of flanges 32f, which extend in the proximity of a respective side wall 30 or 31 perpendicular to the axis 13.

The base wall 32 carries a plurality of elongated rectangular permanent magnets 33, which provide the second magnetic-field generator means 24. Said permanent magnets 33 are arranged on a top face of the wall 32 facing the axis 13 with major sides parallel to one another and spaced at angular distances apart so as to form a band of permanent magnets 33 set between the flanges 32f and having a constant distance from the flanges 32f.

Typically, the permanent magnets 33 are made of neodynium iron boron. The magnetic material that forms the base wall 32 ensures closing of the flux of the field magnetic generated by the magnets 33 for operation of the linear electromagnetic actuator 15.

An absolute encoder 45 (of a known type - **Figure 5**), carried by the supporting structure, detects the angular position **Φ** of the rotating element 9 with respect to a reference (for example, a vertical plane passing through the axis 13). The angular information **Φ** is supplied to an electronic control unit 47 carried by the supporting structure 12, in particular installed on the wall 31. The electronic unit 47 sees to electrical supply of the coil 20. The electrical connections extending between the coil 20 and the electronic control unit 47 are not indicated, for reasons of simplicity, and are obtained with known technologies.

With reference to Figure **5****,** the supporting plate 10 has a markedly rectangular perimeter and is delimited by a plane rectangular resting surface 34a fixed on which is the tray 2 where the objects 3 can be rested. The surface of the tray 2 has a plane rectangular shape or a slightly concave shape with the edges slightly chamfered.

The central area of the supporting plate of the tray 10 has an internal through cavity sharing the axis 13 and housing, by means of interposition of bearings (not illustrated), a rotation shaft 38 (made of steel, whilst the rotating element 9 is preferably made of die-cast aluminium), the end portions of which are carried by bushings 39 **(****Figure 2****),** which are in turn carried by top portions of the side walls 30, 31 of the supporting structure 12. In this way, the rotating element 9 can freely turn with respect to the supporting structure 12 under the thrust of the linear electromagnetic actuator 15 behaving as a pendulum.

The appendage 17 extends radially from the central portion of the supporting plate 10 and has a length Lc such that its end portion 18 faces the permanent magnets 33 and the flanges 32f and is at a short distance (a few millimetres) therefrom. The length Lc of the appendage 17 concurs to defining the arm that defines the torque applied to the tray 2.

Typically, the end portion 18 has a rectangular cross section and is limited by a plane rectangular wall provided with means for fixing of the coil 20, which has a parallelepipedal outer envelope.

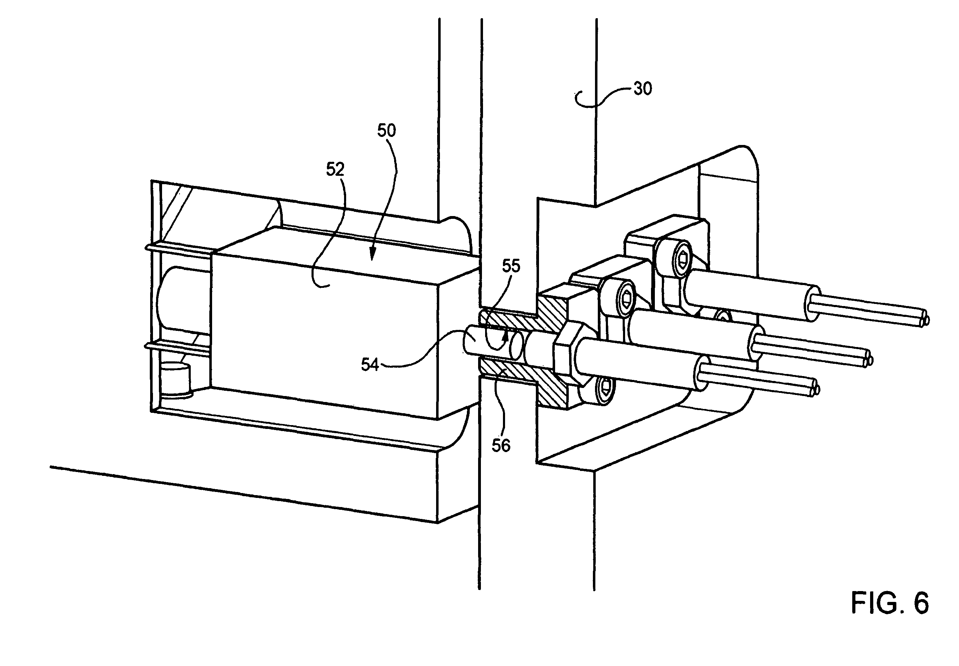

The rotating element 9 is provided with a holding brake 50 **(****Figures 5** **and** **6****)** designed to provide at least one angularly stable position between the rotating element 9 and the supporting structure 12, preventing any accidental oscillation of the rotating element 9 about the axis 13, for example, caused by accelerations applied to the rotating element following upon displacement of the carriage 5 along the guide 4 or during loading of the objects 3 on the tray 2.

The holding brake 50 is typically installed on a side wall of the appendage 17 (see also **Figure 5**) and comprises an actuator 52 (typically an actuator controlled electrically by the electronic control unit 47) carried by the rotating element 9 and provided with a member 54 that is mobile between at least two positions:
- a resting position, in which the mobile member 54 extends towards the supporting structure 12 engaging, by bearing thereupon, a seat 55 provided in a bushing 56 carried by the side wall 30 or 31 in order to prevent rotation of the rotating element 9 about the axis 13; and
- a position of activation, in which the mobile member 54 is set in a retracted position and cannot come to bear upon the seat 55 enabling rotation of the rotating element 9 about the axis 13.

Typically, the transition of the mobile member 54 from the resting position to the actuation position is provided by an electrical command, whereas return towards the resting position is provided by a spring (not illustrated).

**Operation** of the device for loading and unloading objects provided on a carriage 5 will now be illustrated.

In a resting position, also referred to as **"Homing"** position, the appendage 17 is substantially vertical, and the plate 10 is arranged with its resting surface 34a horizontal. In this position, also the tray 2 is horizontal and no voltage is supplied to the coil 20. Effective arrival in the **Homing** position is detected by the absolute encoder 45 that detects an angle equal to zero, i.e., **Φ**=0, and transmits it to the electronic control unit 47.

In the **Homing** position an object 3 can be set on the tray 2. Said operations are performed in a loading station 5 using known techniques. During the loading operations, the holding brake is held in the resting position via coupling of the pin 54 with the slot 55 provided in the bushing 56 carried by the side wall 30 or 31.

Following upon completion of the operations of loading of the object 3, a step of **Overload Check** is performed, i.e., the torque resistant to the motion of the rotating element on account of the weight of the object 3 deposited on the tray 2 is measured. Said measurement of resistant torque is made by detecting the current Im required for displacing by a pre-set angular pitch **Φ**m (of a few degrees - this oscillation is allowed by the play available between the pin 54 and the bushing 56) the rotating element 9 supporting the object 3 from the **Homing** position. The current Im is in fact correlated - by means of mathematical relations of a known type Γ = function (Im) - to the torque Γ necessary for obtaining said angular displacement Φm.

The torque detected Γ is compared with a maximum threshold value Γm.

In the case where a condition of overload is detected, i.e., the resistant torque of the object 3 exceeds the threshold value, the electronic control unit 47 sends a warning signals of malfunctioning and blocks the motion of the carriage 5. The holding brake 50 is kept always in the resting position in order to prevent any dangerous oscillations of the rotating element 9 due to a high loading on the part of the object 3 laid on the tray 2.

In the case where a condition of normal load is detected, i.e., the resistant torque of the object 3 is less than the threshold value, the electronic control unit 37 signals normal operation and enables motion of the carriage 5, which receives the appropriate command for unloading at the outlet 8, whilst it moves along the guide 4 according to the sorting loading. Activation of the device, which is symmetrical both from the geometrical standpoint and from the standpoint of actuation, is possible in both directions of rotation, thus enabling unloading on outlets provided on either sides of the sorter. The electronic control unit 47 can now supply the coil 20, which produces an electromagnetic field that impresses an acceleration tangential to the appendage 17 of the rotating element 9. Prior to or simultaneously with activation of the coil 20, also the solenoid 52 is activated for movement of the brake pin 54, which is extracted from its seat 55, thus making possible movement of the rotating element 9. Consequently, the tray 2 carried by the plate 10 hinged about the axis 13 rotates on the basis of the direction of supply of the current, enabling unloading of the object by gravity (Figure 4).

When the rotating element 9 approaches the end point of the path that corresponds to the maximum inclination envisaged for the tray (for example, 35°), the coil 20 is governed as an electric brake to bring about an extremely sharp deceleration; for example, the supply voltage of the coil is reversed according to known techniques in such a way that the tray 10 in its position of maximum inclination reaches an angular velocity close to zero. Said sharp deceleration ensures unloading of the object 3 from the tray even in the presence of objects 3 that define a high coefficient of friction with the tray 2. Following upon unloading of the object 3, the rotating element returns by gravity into the **Homing** position, and the operations of loading and unloading can be repeated.

## Claims

1. A machine for sorting objects, for example parcels or luggage, comprising a plurality of carriages (5) mobile along a generally closed path between at least one loading station (7) and a plurality of unloading stations (8);
each carriage (5) being provided with at least one tiltingtray device for loading and unloading objects wherein a rotating element (9) provided with a tray (2) is angularly mobile with respect to a supporting structure and about a horizontal axis of rotation (13) under the thrust of actuator means between:
- a loading position, in which the tray (2) is substantially horizontal and is designed to receive an object that can be rested on the tray itself; and
- an unloading position, in which the tray (2) is arranged inclined with respect to the horizontal for enabling unloading of the object by gravity in an accumulation and/or conveying area;
said machine being **characterized in that** said actuator means comprise an appendage (17) of the rotating element (9) that is transverse to the axis of rotation (13) and has an end portion (40) arranged on which are first magnetic-field generator means (20); and
a curved portion (32) of said supporting structure (12) has a profile shaped like the arc of a circumference and carries second magnetic-field generator means (24) arranged at an angular distance apart along said portion shaped like the arc of a circumference;
the interaction between the magnetic fields generated by the first and second magnetic-field generator means produces a torque that is applied to the rotating element (9), thus providing rotation of the tray about the horizontal axis of rotation (13) so as to obtain said inclination.

2. The machine according to Claim 1, wherein the first magnetic-field generator means comprise electromagnets (20), which are arranged on said end portion and can be supplied in a controlled way (47) for producing said torque; said second magnetic-field generator means comprising a plurality of permanent magnets (24) arranged at an angular distance apart on said curved portion (32).

3. The machine according to any one of the preceding claims, wherein said curved portion (32) is made of magnetic material.

4. The machine according to any one of the preceding claims, wherein said supporting structure (12) comprises a first plane side wall (30) and a second plane side wall (31), which provide the sides of the supporting structure and are transverse to the axis of rotation (13); said side walls (30, 31) are interconnected by a base wall (32), which provides said curved portion and has a section shaped like the arc of a circumference with generatrices parallel to the axis of rotation (13).

5. The machine according to any one of the preceding claims, wherein said rotating element (9) is provided with a holding brake (50) designed to provide at least one angularly stable position between the rotating element (9) and the supporting structure (12) preventing any accidental oscillation of the rotating element (9) about the axis (13), for example caused by accelerations applied to the rotating element following upon displacement of the carriage (5).

6. The machine according to Claim 5, wherein said holding brake comprises an actuator (52) carried by the rotating element (9) and provided with a mobile member (54), which can move between at least two positions:
- a resting position, in which the mobile member (54) extends towards the supporting structure (12) engaging, by bearing thereupon, a seat (55) of the supporting structure in order to prevent rotation of the rotating element (9) about the axis (13); and
- a position of activation, in which the mobile member (54) is set in a retracted position and cannot come to bear upon the seat (55) in order to enable rotation of the rotating element (9) about the axis of rotation (13).

7. The machine according to any one of the preceding claims, wherein **Overload Check** means are envisaged designed to detect the torque resistant to the motion of the rotating element on account of the weight of the object (3) deposited on the tray (2);
said **Overload Check** means being designed to detect a condition of overload in the case where the resistant torque detected exceeds a threshold value so as to generate a warning of malfunctioning and stop motion of the carriage (5).

8. The machine according to Claim 7, wherein said **Overload Check** means are configured for detecting the current required for displacing by a pre-set angular pitch the rotating element (9) supporting the object (3) from a resting position; said current being correlated to the torque necessary to obtain said angular displacement.

## Patentansprüche

1. Maschine zum Sortieren von Objekten, beispielsweise von Paketen oder Gepäckstücken, mit mehreren entlang einem im Wesentlichen geschlossenen Weg zwischen mindestens einer Beladestation (7) und mehreren Entladestationen (8) bewegbaren Wagen (5);
wobei jeder Wagen (5) mit mindestens einer Kippplattenvorrichtung zum Laden und Entladen von Objekten versehen ist, wobei ein mit einer Platte (2) versehenes Drehelement (9) in Bezug auf eine Stützstruktur und um eine horizontale Drehachse (13) unter Schub durch Aktuatoreinrichtungen zwischen
- einer Ladeposition, in welcher die Platte (2) im Wesentlichen horizontal ist und welche zum Aufnehmen eines Objekts ausgebildet ist, das auf der Platte selbst abgestellt werden kann; und
- einer Entladeposition, in welcher die Platte (2) in Bezug auf die Horizontale geneigt ist, um das Entladen des Objekts durch Schwerkraftwirkung in einen Sammel- und/oder Förderbereich zu ermöglichen,
winklig bewegbar ist, wobei die Maschine **dadurch gekennzeichnet ist, dass** die Aktuatoreinrichtungen einen Fortsatz (17) des Drehelements (9) aufweisen, der quer zur Drehachse (13) verläuft und einen Endbereich (40) aufweisen, an welchem erste Magnetfelderzeugungseinrichtungen (20) angeordnet sind; und
ein gebogener Bereich (32) der Stützstruktur (12) ein Profil aufweist, das nach Art eines Teilkreisbogens geformt ist und zweite Magnetfelderzeugungseinrichtungen (24) trägt, welche winklig voneinander beabstandet entlang dem teilkreisbogenförmigen Bereich angeordnet sind;
das Zusammenwirken zwischen den von den ersten und den zweiten Magnetfelderzeugungseinrichtungen erzeugten Magnetfeldern ein Drehmoment erzeugt, welches auf das Drehelement (9) aufgebracht wird, wodurch ein Drehen der Platte um die horizontale Drehachse (13) bewirkt wird, um so die Neigung zu erreichen.

2. Maschine nach Anspruch 1, bei welcher die ersten Magnetfelderzeugungseinrichtungen Elektromagnete (20) aufweisen, welche an dem Endbereich angeordnet sind und in kontrollierter Weise (47) zur Erzeugung des Drehmoments versorgt werden können; wobei die zweiten Magnetfelderzeugungseinrichtungen mehrere Permanentmagnete (24) aufweisen, welche winklig voneinander beabstandet an dem gebogenen Bereich (32) angeordnet sind.

3. Maschine nach einem der vorhergehenden Ansprüche, bei welcher der gebogene Bereich (32) aus magnetischem Material besteht.

4. Maschine nach einem der vorhergehenden Ansprüche, bei welcher die Stützstruktur (12) eine erste ebene Seitenwand (30) und eine zweite ebene Seitenwand (31) aufweist, welche die Seiten der Stützstruktur bilden und quer zur Drehachse (13) verlaufen; wobei die Seitenwände (30, 31) durch eine Basiswand (32) verbunden sind, welche den gebogenen Bereich bildet und einen teilkreisbogenförmigen Querschnitt mit parallel zu der Drehachse (13) verlaufenden Mantellinien aufweist.

5. Maschine nach einem der vorhergehenden Ansprüche, bei welcher das Drehelement (9) mit einer Feststellbremse (50) versehen ist, welche derart ausgebildet ist, dass sie mindestens eine winkelstabile Position zwischen dem Drehelement (9) und der Stützstruktur (12) ermöglicht, wodurch jegliches unbeabsichtigte Schwingen des Drehelements (9) um die Achse (13), wie es beispielsweise durch eine bei der Bewegung des Wagens (5) auf das Drehelement (9) aufgebrachte Beschleunigung verursacht werden kann, verhindert ist.

6. Maschine nach Anspruch 5, bei welcher die Feststellbremse einen Aktuator (52) aufweist, der von dem Drehelement (9) getragen ist und mit einem bewegbaren Teil (54) versehen ist, das zwischen mindestens zwei Positionen bewegbar ist:
- einer Ruheposition, in welcher das bewegbare Teil (54) sich in Richtung der Stützstruktur (12) erstreckt, wobei es an einem Sitz (55) der Stützstruktur durch Aufliegen auf diesem angreift, um das Drehen des Drehelements (9) um die Achse (13) zu verhindern; und
- einer Aktivierungsposition, in welcher das bewegbare Teil (54) in eine zurückgezogene Position versetzt ist und nicht in Auflage auf dem Sitz (55) gelangen kann, um das Drehen des Drehelements (9) um die Drehachse (13) zu erlauben.

7. Maschine nach einem der vorhergehenden Ansprüche, bei welcher Überladungsprüfeinrichtungen vorgesehen sind, welche derart ausgebildet sind, dass sie das der Bewegung des Drehelements aufgrund des Gewichts des auf der Platte (2) befindlichen Objekts (3) entgegenwirkende Drehmoment erkennen;
wobei die Überladungsprüfeinrichtungen derart ausgebildet sind, dass sie einen Überladungszustand in dem Fall erkennen, dass das erkannte Widerstandsdrehmoment einen Schwellenwert übersteigt, so dass sie eine Fehlfunktionswarnung ausgeben und ein Anhalten der Bewegung des Wagens (5) bewirken.

8. Maschine nach Anspruch 7, bei welcher die Überladungsprüfeinrichtungen derart ausgebildet sind, dass sie den Strom erkennen, der für das Bewegen des das Objekt (3) tragenden Drehelements (9) um einen vorbestimmten Winkelabstand aus der Ruheposition heraus erforderlich ist; wobei der Strom in Korrelation mit dem für das Erreichen der Winkelverschiebung erforderlichen Drehmoment steht.

## Revendications

1. Machine destinée à trier des objets, par exemple des colis ou des bagages, comprenant une pluralité de chariots (5) mobiles le long d'un trajet généralement fermé entre au moins une station de chargement (7) et une pluralité de stations de déchargement (8) ;
chaque chariot (5) étant doté d'au moins un dispositif de plateau basculant destiné à charger et décharger des objets, dans lequel un élément rotatif (9) doté d'un plateau (2) est angulairement mobile par rapport à une structure de support et autour d'un axe horizontal de rotation (13) sous la poussée de moyens d'actionneur entre :
- une position de chargement, dans laquelle le plateau (2) est sensiblement horizontal et est conçu pour recevoir un objet qui peut reposer sur le plateau lui-même ; et
- une position de déchargement, dans laquelle le plateau (2) est agencé incliné par rapport à l'horizontale pour permettre le déchargement de l'objet par gravité dans une zone d'accumulation et/ou de transport ;
ladite machine étant **caractérisée en ce que** lesdits moyens d'actionneur comprennent un appendice (17) de l'élément rotatif (9) qui est transversal à l'axe de rotation (13) et a une portion d'extrémité (40) sur laquelle se trouvent agencés des premiers moyens de générateur de champ magnétique (20) ; et
une portion incurvée (32) de ladite structure de support (12) a un profil formé comme l'arc d'une circonférence et porte des seconds moyens de générateur de champ magnétique (24) agencés à une distance angulaire éloignée le long de ladite portion formée comme l'arc d'une circonférence ;
l'interaction entre les champs magnétiques générés par les premiers et seconds moyens de générateur de champ magnétique produit un couple qui est appliqué à l'élément rotatif (9), fournissant ainsi une rotation du plateau autour de l'axe horizontal de rotation (13) de façon à obtenir ladite inclinaison.

2. Machine selon la revendication 1, dans laquelle les premiers moyens de générateur de champ magnétique comprennent des électroaimants (20), qui sont agencés sur ladite portion d'extrémité et peuvent être fournis de façon commandée (47) afin de produire ledit couple ; lesdits seconds moyens de générateur de champ magnétique comprenant une pluralité d'aimants permanents (24) agencés à une distance angulaire éloignée sur ladite portion incurvée (32).

3. Machine selon l'une quelconque des revendications précédentes, dans laquelle ladite portion incurvée (32) est constituée de matériau magnétique.

4. Machine selon l'une quelconque des revendications précédentes, dans laquelle ladite structure de support (12) comprend une première paroi latérale plane (30) et une seconde paroi latérale plane (31), qui fournissent les côtés de la structure de support et sont transversales à l'axe de rotation (13) ; lesdites parois latérales (30, 31) étant connectées par une paroi de base (32), qui fournit ladite portion incurvée et a une section formée comme l'arc d'une circonférence avec des génératrices parallèles à l'axe de rotation (13).

5. Machine selon l'une quelconque des revendications précédentes, dans laquelle ledit élément rotatif (9) est doté d'un frein d'arrêt (50) conçu pour fournir au moins une position angulairement stable entre l'élément rotatif (9) et la structure de support (12) empêchant toute oscillation accidentelle de l'élément rotatif (9) autour de l'axe (13), provoquée par exemple par des accélérations appliquées à l'élément rotatif à la suite du déplacement du chariot (5).

6. Machine selon la revendication 5, dans laquelle ledit frein d'arrêt comprend un actionneur (52) porté par l'élément rotatif (9) et doté d'un organe mobile (54), qui peut se déplacer entre au moins deux positions :
- une position de repos, dans laquelle l'organe mobile (54) s'étend vers la structure de support (12) mettant en prise, par appui sur celui-ci, un siège (55) de la structure de support afin d'empêcher une rotation de l'élément rotatif (9) autour de l'axe (13) ; et
- une position d'activation, dans laquelle l'organe mobile (54) est placé dans une position rétractée et ne peut venir appuyer sur le siège (55) afin de permettre une rotation de l'élément rotatif (9) autour de l'axe de rotation (13).

7. Machine selon l'une quelconque des revendications précédentes, dans laquelle des moyens de vérification de surcharge sont prévus, conçus pour détecter le couple résistant au mouvement de l'élément rotatif en raison du poids de l'objet (3) déposé sur le plateau (2) ;
lesdits moyens de vérification de surcharge étant conçus pour détecter une condition de surcharge dans le cas où le couple résistant détecté dépasse une valeur seuil de façon à générer un avertissement de dysfonctionnement et arrêter le mouvement du chariot (5).

8. Machine selon la revendication 7, dans laquelle lesdits moyens de vérification de surcharge sont configurés pour détecter le courant nécessaire pour déplacer par un pas angulaire pré-établi l'élément rotatif (9) supportant l'objet (3) depuis une position de repos ; ledit courant étant corrélé au couple nécessaire pour obtenir ledit déplacement angulaire.
